(19) **Europäisches Patentamt**
**European Patent Office**
**Office européen des brevets**

(11) **EP 1 806 225 A1**

(12) **EUROPÄISCHE PATENTANMELDUNG**

(43) Veröffentlichungstag:
**11.07.2007 Patentblatt 2007/28**

(21) Anmeldenummer: **06024869.7**

(22) Anmeldetag: **01.12.2006**

(51) Int Cl.:
*B32B 27/36* *(2006.01)* *B32B 27/20* *(2006.01)*
*B65D 77/20* *(2006.01)* *B65B 7/28* *(2006.01)*
*C08K 3/22* *(2006.01)* *C08K 3/36* *(2006.01)*

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **09.12.2005 DE 102005058917**
**09.12.2005 DE 102005058915**

(71) Anmelder: **Mitsubishi Polyester Film GmbH**
**65023 Wiesbaden (DE)**

(72) Erfinder:
• **Jesberger, Martin**
**55122 Mainz (DE)**

• **Peiffer, Herbert**
**55126 Mainz (DE)**
• **Hilkert, Gottfried**
**55291 Saulheim (DE)**
• **Hora, Franz**
**65830 Kriftel (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Mehrschichtige, weisse, biaxial orientierte Polyesterfolie**

(57) Die Erfindung betrifft eine weiße, biaxial orientierte Polyesterfolie, bevorzugt aus PET, mit einer Basisschicht und mindestens einer Deckschicht, wobei die Basisschicht ein weißfärbendes Pigment in einer Konzentration von 3 bis 15 Gew.-% enthält, die Deckschicht ein weißfärbendes Pigment in einer Konzentration von 2 bis 15 Gew.-% und 0,01 bis 2 Gew.-% eines Antiblockmittels mit einem mittleren Teilchendurchmesser von 2 bis 8 $\mu$m enthält. Gegebenenfalls ist mindestens eine Folienoberfläche funktionsvermittelnd beschichtet. Die Folie eignet sich insbesondere als Deckelfolie für Lebensmittelbehältnisse.

**Beschreibung**

Die Erfindung betrifft eine mehrschichtige, weiße, biaxial orientierte Polyesterfolie umfassend eine Basisschicht (B), welche einen thermoplastischen Polyester und ein Weißpigment enthält, sowie mindestens eine Deckschicht (A). Die Deckschicht (A) enthält neben einem Weißpigment (weißfärbendes Pigment) zusätzlich ein Antiblockmittel. Gegebenenfalls besitzt die erfindungsgemäße Folie mindestens eine funktionalisierte Oberfläche, die z. B. eine gute Haftung gegenüber anderen Polymer- oder Metall-Schichten oder Druckfarben aufweist. Dazu wird diese Oberfläche mit einer haftvermittelnden Schicht in-line beschichtet. Die Erfindung betrifft weiterhin ein Verfahren zur Herstellung der Folie und ihre Verwendung.

Weiße, biaxial orientierte Polyesterfolien, insbesondere für die Deckelanwendung bei Joghurtbechern, sind nach dem Stand der Technik bekannt.

Die EP-B-0 605 130 beschreibt eine mehrschichtige, coextrudierte Verbundfolie mit einer Dicke im Bereich von 30 bis 400 $\mu$m. Die Folie umfasst eine trübe kristalline erste Polyesterschicht, die im Wesentlichen für sichtbares Licht undurchlässig ist, eine Dichte von mehr als 1,30 g/cm$^3$, eine Dicke von größer als oder gleich 25 $\mu$m und einen Verformungsindex von größer als oder gleich 2,5 % aufweist. Der Verformungsindex wird bei einer Temperatur von 200 °C und unter einem Druck von 2 MPa gemessen. Daneben umfasst die Folie eine transparente kristalline zweite Polyesterschicht, die "substantially permeable to visible light" ist und eine TOD (transmission optical density) von 0.005 bis 0.2 aufweist. Weiterhin ist im Sinne der Erfindung eine Transparenz dieser Schicht noch gegeben, wenn in ihr weniger als 2 % Partikel vorhanden sind, die eine Teilchengröße von 0,1 bis 10 $\mu$m haben. Die Folie zeichnet sich durch eine gute Opazität aus, sie weist jedoch Defizite bei ihrer Herstellung (keine optimale Rollenaufmachung), bei ihrer Verarbeitung zu Deckeln und insbesondere in den optischen Eigenschaften auf.

Die EP-A-1 176 004 beschreibt eine weiße, biaxial orientierte, in der Regel einschichtige Polyesterfolie mit einer Basisschicht (B), die sich aufgrund ihrer speziellen mechanischen Eigenschaften sehr gut als Deckelfolie, insbesondere als Deckelfolie für Joghurtbecher, eignet. Die Folie ist dadurch gekennzeichnet ist, dass der R-Wert kleiner/ gleich 45 daN/mm$^2$ und das $e_{max}$-Verhältnis kleiner/gleich 2,5 ist. Durch das Einhalten dieser Werte neigt die Folie weniger zum Delaminieren und zeigt ein gutes Abziehverhalten vom Becher. Die Folie zeichnet sich weiterhin durch eine gute Opazität aus, sie weist jedoch noch Defizite bei ihrer Herstellung (keine optimale Rollenaufmachung) und in den optischen Eigenschaften auf.

Aufgabe der vorliegenden Erfindung war es daher, eine weiße, biaxial orientierte Polyesterfolie, insbesondere für die Joghurtdeckel-Anwendung, bereitzustellen, die sich gegenüber den im Stand der Technik bekannten Polyesterfolien durch verbesserte Eigenschaften, insbesondere durch eine verbesserte Herstellbarkeit (insbesondere durch eine verbesserte Wickelung), ein verbessertes Verarbeitungsverhalten und verbesserte optische Eigenschaften (Glanz, Erscheinungsbild), auszeichnet. Weiter von Vorteil wäre, wenn sich die Folie durch eine gute Haftung gegenüber Farben, Klebern, Primern, metallischen und keramischen Schichten auszeichnet.

Die Aufgabe wird erfindungsgemäß durch die Bereitstellung einer weißen, coextrudierten, biaxial orientierten Polyesterfolie mit einer Basisschicht (B) und mindestens einer Deckschicht (A) gelöst, wobei

a) die Basisschicht (B) ein weißfärbendes Pigment in einer Konzentration von 3 bis 15 Gew.-% enthält (bezogen auf das Gewicht der Basisschicht (B)) und

b) die Deckschicht (A) ein weißfärbendes Pigment in einer Konzentration von 2 bis 15 Gew.-% enthält und zusätzlich 0,01 bis 2 Gew.-% eines Antiblockmittels mit einem mittleren Durchmesser ($d_{50}$-Wert) im Bereich von 2 bis 8 $\mu$m enthält (Gew.-% Angaben bezogen auf das Gewicht der Deckschicht (A)).

Zur Erzielung der gewünschten Hafteigenschaften ist es zweckmäßig, wenn darüber hinaus c) zumindest eine der beiden Folienoberflächen eine funktionsvermittelnde Schicht trägt oder funktionsvermittelnd behandelt ist.

Diese Schicht wird bevorzugt als wässrige Dispersion auf die Folie aufgebracht.

Unter einem weißfärbenden Pigment werden auch Mischungen verschiedener weißfärbender Pigmente oder Mischungen von weißfärbenden Pigmenten gleicher Zusammensetzung, aber unterschiedlicher Partikelgröße verstanden.

Die weiße, biaxial orientierte Folie gemäß der vorliegenden Erfindung ist zumindest zweischichtig aufgebaut. Sie besteht dann aus der Basisschicht (B) und der auf dieser durch Coextrusion aufgebrachten Deckschicht (A), wobei beide Schichten zumindest ein Weißpigment enthalten und die Deckschicht (A) ein zusätzliches, für die Herstellung der Folie (Wickelung) förderliches Antiblockmittel enthält. Die erfindungsgemäße Folie kann darüber hinaus auf zumindest einer Folienoberfläche eine bevorzugt haftvermittelnde Schicht aufweisen, die bevorzugt als wässrige Dispersion auf die Folie aufgebracht wird.

In der bevorzugten Ausführungsform ist die Folie drei - oder mehr als dreischichtig, beispielsweise vier- oder fünfschichtig aufgebaut.

Im Falle der bevorzugten dreischichtigen Ausführungsform besteht die Folie aus der Basisschicht (B), der Deckschicht (A) und einer der Deckschicht (A) gegenüberliegenden Deckschicht (C) - Schichtaufbau ABC. Besonders bevorzugt ist hierbei der symmetrische dreischichtige Aufbau (ABA), bei dem die Schichten (A) und (C) im Rahmen von produktionsbedingten Schwankungen als gleich anzusehen sind. Dieser Folienaufbau bringt hinsichtlich einer einwandfreien Verarbeitung der Folie die besten Voraussetzungen mit sich. So besitzen beispielsweise unsymmetrische Folienaufbauten wie beispielsweise (ABC) oder insbesondere der zuvor genannte (AB)-Aufbau (vgl. dazu EP-B-0 605 130) eine bestimmte Rollneigung (engl. Curling), was unerwünscht ist. Die Rollneigung wird hauptsächlich erst bei dem aus der Folienbahn ausgestanzten Deckel sichtbar. Der Deckel liegt in diesem Fall nicht mehr plan auf einer ebenen Unterlage auf, sondern wölbt sich je nachdem mit den Rändern nach oben auf, oder er wird bauchig. In diesem Fall kann er beispielsweise beim Weitertransport oder bei der Zuführung in das Siegelwerkzeug hängen bleiben, was zu einer Erhöhung der Ausschussrate führt.

Es wurde gefunden, dass bei der bevorzugten Verwendung von im Wesentlichen $TiO_2$ als einfärbendem Pigment (Weißpigment) die Folie weniger anfällig gegenüber Einreißen und Delaminierung wird. Die Zugabe des $TiO_2$ bevorzugt über die Masterbatchtechnologie hat den Vorteil, dass Farbunterschiede, z. B. durch nicht konstante Regenerateigenschaften, leicht korrigiert werden können. Bei Verwendung von $TiO_2$ als alleinigem Pigment wird die Folie besonders glatt und damit glänzender, neigt aber zum Verblocken.

Bevorzugte Polymere für die Basisschicht (B) und für die Deckschichten:

Basisschicht (B)

Die Basisschicht (B) der Folie besteht bevorzugt zu mindestens 80 Gew.-%, insbesondere zu mindestens 85 Gew.-% und besonders bevorzugt zu mindestens 90 Gew.-% aus einem thermoplastischen Polyester. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat, PCDT)] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen dann aus anderen aliphatischen, cycloaliphatischen oder aromatischen Diolen bzw. anderen Dicarbonsäuren. Bevorzugt besteht die Basisschicht aus PET. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkananteil geradkettig oder verzweigt sein kann.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Deckschicht (A)

Für die Deckschicht (A), für eine eventuell vorhandene weitere Deckschicht (C) und für eventuell vorhandene weitere Zwischenschichten (D) und (E) werden bevorzugt die gleichen Polymeren verwendet wie sie zuvor für die Basisschicht (B) angegeben wurden. Insbesondere enthalten die Basisschicht und die weiteren Schichten identische Polymere (Polyester).

Weißpigment

Zur Erzielung der vorgenannten Eigenschaften, insbesondere des gewünschten Weißgrades der Folie, werden in die Basisschicht (B) und zumindest in eine Deckschicht (A), eventuell aber auch in vorhandene andere Schichten, die notwendigen Weißpigmente eingearbeitet. In Frage kommen Titandioxid, Bariumsulfat, Zinksulfid oder Zinkoxid. In bevorzugter Weise wird $TiO_2$ als alleiniges einfärbendes Pigment verwendet. Es wird in der bevorzugten Ausführungsform als Extrusionsmasterbatch dem Originalrohstoff zugegeben. Typische Bereiche für die $TiO_2$-Konzentration im Extrusionsmasterbatch sind 20 bis 70 Gew.-%. Das Titandioxid kann sowohl vom Rutil-Typ als auch vom Anatas-Typ oder eine Mischung aus Rutil- und Anatas-Typ sein. Vorzugsweise wird in der Basisschicht Titandioxid vom Anatas-Typ und in der Deckschicht Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente in den vorgesehenen Konzentrationen ein brillantes weißes Aussehen.

Um zu dem gewünschten Weißgrad (bevorzugt > 60) und zu der gewünschten niedrigen Transparenz (bevorzugt < 60 %) der Folie zu gelangen, sollte die Basisschicht (B) hochgefüllt sein. Die Konzentration der Weißpigmente zur Erzielung der gewünschten niedrigen Transparenz liegt zwischen 3 und 15 Gew.-%, bevorzugt zwischen 3,5 und 14 Gew.-% und besonders bevorzugt zwischen 4,0 und 13 Gew.-%, bezogen auf das Gesamtgewicht der sie enthaltenden Schicht.

Zu einer weiteren Steigerung des Weißgrades können in einer besonderen Ausführungsform geeignete optische Aufheller der Basisschicht und/oder den anderen Schichten zugesetzt werden. Geeignete optische Aufheller sind beispielsweise Hostalux® KS der Firma Clariant oder Eastobrite® OB-1 der Firma Eastman.

Erfindungsgemäß enthält die Deckschicht (A), gegebenenfalls auch die weitere Deckschicht (C) und gegebenenfalls weitere Zwischenschichten (D) und (E), zumindest ein weißfärbendes Pigment in einer Konzentration von 2 bis 15 Gew.-%. Die Konzentration wird dabei bevorzugt so gewählt, dass der Weißgrad (nach Berger) der Folie größer als 60 ist. Im anderen Fall ist die Folie für die bevorzugte Anwendung (z. B. gesiegelte Deckelfolie auf Joghurtbecher) von den optischen Eigenschaften her weniger geeignet, da sie zu durchscheinend sein kann.

Enthält die Deckschicht (A) ein weißfärbendes Pigmentsystem, bei dem die Konzentration des weißfärbenden Pigmentes kleiner/gleich ist als 2 %, so geht der brillante weiße Charakter der Folie verloren und der nachfolgend aufgebrachte Druck auf dieser Seite erscheint dem Betrachter fehlerhaft. Enthält die Deckschicht (A) dagegen ein weißfärbendes Pigmentsystem, bei dem die Konzentration des weißfärbendes Pigmentes größer ist als 15 Gew.-%, so ist die Gefahr groß, dass das Weißpigment auskreidet.

Es wurde gefunden, dass die Wickelbarkeit der Folie und die Rollenaufmachung deutlich verbessert werden können, wenn die Deckschicht (A) und gegebenenfalls auch die weitere Deckschicht (C) ein Antiblockmittel enthält. Dabei wurde festgestellt, dass insbesondere der mittlere Partikeldurchmesser $d_{50}$ und die Konzentration des zusätzlich verwendeten Antiblockmittels in der Deckschicht (A) für eine gute Wickelbarkeit und für eine gute Verarbeitbarkeit der Folie von Bedeutung sind.

Zur Verbesserung der Wickelung und Verarbeitbarkeit der Folie enthält zumindest die Deckschicht (A) ein Antiblockmittel, bei dem der mittlere Durchmesser ($d_{50}$-Wert) im Bereich von bevorzugt 2 bis 8 $\mu$m liegt.

In der bevorzugten Ausführungsform enthält die Deckschicht (A) ein Antiblockmittel, bei dem der mittlere Durchmesser im Bereich von 2,1 bis 7 $\mu$m liegt, und in der besonders bevorzugten Ausführungsform enthält die Deckschicht (A) ein Antiblockmittel, bei dem der mittlere Durchmesser im Bereich von 2,2 bis 6 $\mu$m liegt.

Enthält die Deckschicht (A) dagegen ein Antiblockmittel, bei dem der mittlere Durchmesser außerhalb des bevorzugten Bereiches liegt, so wirkt sich dies negativ auf die Wickelung, die Verarbeitbarkeit und auf die optischen Eigenschaften der Folie aus.

Enthält die Deckschicht (A) ein Antiblockmittel, bei dem der mittlere Durchmesser größer als 8 $\mu$m ist, so werden die optischen Eigenschaften und die Wickelung der Folie schlechter. Enthält die Deckschicht (A) der Folie dagegen ein Antiblockmittel, bei dem der mittlere Durchmesser kleiner als 2 $\mu$m ist, so wird die Wickelung der Folie und damit die Rollenaufmachung schlechter.

Die Deckschicht (A) und gegebenenfalls auch die weitere Deckschicht (C) werden zur Verbesserung des Wickelverhaltens und der Verarbeitbarkeit mit dem Antiblockmittel ausgerüstet. Die Konzentration der Antiblockmittel in der Deckschicht (A) und gegebenenfalls auch in der weiteren Deckschicht (C) liegt in der bevorzugten Ausführungsform zwischen 0,05 und 1,8 Gew.-% und in der besonders bevorzugten Ausführungsform zwischen 0, 1 und 1,6 Gew.-% und richtet sich im Wesentlichen nach den zu erzielenden optischen Eigenschaften und der zu erzielenden Wickelbarkeit der Folie.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Kaolin oder vernetzte organische Partikel wie Polystyrol- oder Arcrylat-Partikel.

Als Antiblockmittel können auch Mischungen von zwei oder mehreren verschiedenen Antiblockmitteln oder Mischungen von Antiblockmitteln gleicher Zusammensetzung, aber unterschiedlicher Partikelgröße gewählt werden, wenn für die Mischungen die oben angegebenen Bedingungen bezüglich Gesamtmenge und mittlerem Teilchendurchmesser erfüllt sind. Die Antiblockmittel können dem Polyester der Deckschicht in den jeweils vorteilhaften Konzentrationen, z. B. als glykolische Dispersion während der Polykondensation oder über Masterbatche bei der Extrusion, zugegeben werden.

Die Zugabe von Antiblockmittel in der erfindungsgemäßen Konzentration in die Deckschicht (A) hat daneben den gewünschten positiven Effekt auf die Rauigkeit und den Reibungskoeffizienten der Deckschicht (A). Um das Verarbeitungsverhalten der Folie weiterhin zu verbessern, sollte in einem günstigen Fall die Konzentration des Antiblockmittels so gewählt werden, dass für die Rauigkeit und für den Reibungskoeffizient folgende Werte erzielt werden.

Der Reibungskoeffizient (COF) der Seite (A) gegen sich selbst sollte bevorzugt kleiner/gleich 0,4 sein. Andernfalls sind das Wickelverhalten und die Weiterverarbeitung der Folie unbefriedigend.

Die Rauigkeit der Deckschicht (A), ausgedrückt als ihr $R_a$-Wert, sollte bevorzugt größer/gleich 40 nm und kleiner/gleich 150 nm sein. Kleinere $R_a$-Werte als 40 nm haben negative Auswirkungen auf das Wickel- und Verarbeitungsverhalten der Folie, größere $R_a$-Werte als 150 nm beeinträchtigen die optischen Eigenschaften (Glanz) der Folie. Die Angaben zu Reibungskoeffizient und Rauigkeit der Deckschicht (A) beziehen sich auf die unbehandelte/unbeschichtete Deckschicht (A).

Besonders bevorzugt enthalten die Basisschicht und die Deckschichten (A) und (C) jeweils ein weißfärbendes Pigment, insbesondere Titandioxid, das in allen Schichten identisch ist. Als Antiblockmittel in den Deckschichten wird bevorzugt ebenfalls jeweils ein identisches Pigment, insbesondere Siliciumdioxid, verwendet.

Bei der Folie liegt die Dicke der Deckschicht (A) und/oder (C) im Allgemeinen im Bereich von 0,4 $\mu$m bis 6 $\mu$m, bevorzugt im Bereich von 0,5 bis 5 $\mu$m und besonders bevorzugt im Bereich von 0,6 bis 4 $\mu$m.

Die Basisschicht (B) sowie die weiteren Schichten, z. B. (A) und (C), können zusätzlich übliche Additive wie z. B. Stabilisatoren enthalten. Sie werden üblicherweise dem Polymer oder der Polymermischung vor dem Aufschmelzen zugesetzt. Als Stabilisatoren werden beispielsweise Phosphorverbindungen wie Phosphorsäure oder Phosphorsäureester eingesetzt.

Die Dicke der Polyesterfolie nach der vorliegenden Erfindung kann innerhalb weiter Grenzen variieren. Sie beträgt bevorzugt 5 bis 500 $\mu$m, insbesondere 8 bis 400 $\mu$m und besonders bevorzugt 10 bis 300 $\mu$m, wobei die Basisschicht einen Anteil von bevorzugt 50 bis 95 % an der Gesamtdicke hat.

Mindestens eine Folienoberfläche der erfindungsgemäßen Folie kann funktionsvermittelnd beschichtet und/oder behandelt sein. Der Kontaktwinkel dieser Oberfläche zu Wasser beträgt dann ≤ 64°, bevorzugt ≤ 62° und besonders bevorzugt ≤ 60°. Diese Oberfläche weist insbesondere ein erhöhtes Haftvermögen gegenüber anderen Materialien auf.

Dies wird durch eine Corona- bzw. Flammbehandlung erreicht, die sich üblicherweise an die Thermofixierung der Folie anschließt. Ebenso kann die Behandlung an anderen Stellen im Folienherstellprozess, beispielsweise nach der Längsstreckung, erfolgen. Alternativ oder zusätzlich zu der oben beschriebenen Oberflächenbehandlung kann die Folie auf einer (oder beiden) Oberfläche(n) mit einer funktionalen Beschichtung beschichtet werden, so dass die Beschichtung auf der fertigen Folie eine Dicke von bevorzugt 5 bis 2000 nm, insbesondere 20 bis 500 nm und besonders bevorzugt 30 bis 200 nm aufweist. Die Beschichtung wird bevorzugt in-line aufgebracht, d. h. während des Folienherstellprozesses, zweckmäßigerweise vor der Querstreckung. Besonders bevorzugt ist die Aufbringung mittels des "Reverse gravure roll coating"-Verfahrens, bei dem sich die Beschichtung äußerst homogen in Schichtdicken bis 200 nm auftragen lässt. Ebenfalls bevorzugt ist die Auftragung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion; beispielsweise wird die Folie dadurch siegelfähig, bedruckbar, metallisierbar, sterilisierbar, antistatisch, oder sie verbessern z. B. die Aromabarriere oder ermöglichen die Haftung zu Materialien, die ansonsten nicht auf der Folienoberfläche haften würden. Beispiele für Stoffe/Zusammensetzungen, die zusätzliche Funktionalität verleihen, sind: Acrylate wie sie beispielsweise beschrieben sind in der WO 94/13476, Ethylvinylalkohole, PVDC, Wasserglas ($Na_2SiO_4$), hydrophile Polyester (5-Na-sulfoisophthalsäurehaltiger PET/IPA-Polyester wie sie beispielsweise beschrieben sind in der EP-A-0 144 878, US-A-4,252,885 oder EP-A-0 296 620), Polyvinylacetate wie sie beispielsweise beschrieben sind in der WO 94/13481, Polyurethane, Alkali- oder Erdalkalisalze von $C_{10}$-$C_{18}$-Fettsäuren, Butadiencopolymere mit Acrylnitril oder Methylmethacrylat, Mathacrylsäure oder deren Ester.

Die genannten Stoffe/Zusammensetzungen werden als verdünnte Lösung, Emulsion oder Dispersion, vorzugsweise als wässrige Lösung, Emulsion oder Dispersion, auf eine oder beide Folienoberflächen aufgebracht, und anschließend wird das Lösungsmittel verflüchtigt. Werden die Beschichtungen in-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von ($\alpha$) Isophthalsäure, ($\beta$) einer aliphatischen Dicarbonsäure mit der Formel

$$HOOC(CH_2)_nCOOH,$$

wobei n im Bereich von 1 bis 11 liegt, (γ) einem Sulfomonomeren enthaltend eine Alkalimetallsulfonatgruppe an dem aromatischen Teil einer aromatischen Dicarbonsäure und (δ) wenigstens einem aliphatischen oder cycloaliphatischen Alkylenglykol mit etwa 2 bis 11, bevorzugt 2 bis 8, besonders bevorzugt 2 bis 6 Kohlenstoffatomen, hergestellt. Die insgesamt anwesenden Säureäquivalente sollen auf molarer Basis im Wesentlichen den insgesamt anwesenden Glykoläquivalenten entsprechen.

Es hat sich gezeigt, dass die verhältnismäßigen Anteile der Komponenten (α), (β), (γ) und (δ), die zur Herstellung der bevorzugten Copolyesterbeschichtungen eingesetzt werden, entscheidend für das Erzielen einer beschichteten Folie mit zufriedenstellender Haftung sind. So sollte bevorzugt z. B. Isophthalsäure (Komponente α) zu mindestens etwa 65 Mol-% als Säurekomponente anwesend sein. Bevorzugt ist als Komponente (α) reine Isophthalsäure, die in einer Menge von etwa 70 bis 95 Mol-% anwesend ist. Für die Komponente (β) gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente (β) in der Zusammensetzung enthalten ist. Das die Komponente (γ) der bevorzugten Copolyesterbeschichtung bildende Monomere sollte bevorzugt in einer Menge von wenigstens 5 Mol-% in diesem System enthalten sein, damit die Grundierung mit Wasser dispergierbar wird. Besonders bevorzugt liegt die Menge an Monomerem der Komponente (γ) bei etwa 6,5 bis 12 Mol-%. Die Glykolkomponente (δ) ist in ungefähr stöchiometrischer Menge anwesend.

In einer weiteren bevorzugten Ausführungsform der Erfindung wird eine Acrylatbeschichtung zur Erzielung der besseren Haftung verwendet. Die bevorzugt verwendeten Acrylcopolymere bestehen im Wesentlichen aus mindestens 50 Gew.-% eines oder mehrerer polymerisierter, acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Haftvermittlercopolymeren ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C- Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zwischen der Polyesterrolle und darauf aufgebrachten reprographischen Beschichtungen und Mattbeschichtungen. Ganz besonders bevorzugt werden Haftvermittlercopolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat- Comonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden wie z. B. N- Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N- Methylolmethacrylamid bevorzugt, und zwar in erster Linie deswegen, weil Copolymerenketten, die eines dieser Monomere enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z. B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die bevorzugte Acrylat-Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann auf drei Weisen erzielt werden:

1. eine Mischung aus einem aromatischen Copolyester (I-1) mit einer in Wasser dispergierbaren funktionellen Gruppe und einem Polyvinylalkohol (II-1),

2. eine Mischung aus einem aromatischen Copolyester (I-2) mit einer in Wasser dispergierbaren funktionellen Gruppe und einem Polyglycerolpolyglycidylether (II-2) oder

3. eine Mischung aus einem wässrigen Polyurethan (I-3) und einem Polyvinylalkohol (II-3).

Die aromatischen Copolyester (I-1 und I-2) werden aus aromatischen Dicarbonsäuren wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie einer esterbildenden Verbindung, die eine in Wasser dispergierbare funktionelle Gruppe trägt, hergestellt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80 bis 99,9 % betragen. Als Polyglycerolpolyglycidylether (II-2) werden Reaktionsprodukte von Glycerin und Epichlorhydrin mit Molekulargewichten zwischen ca. 250 und 1200 g/mol verwendet. Das wässrige Polyurethan (I-3) wird aus einem Polyol, wie zum Beispiel Polyester mit Glykol-Endgruppen, Polyoxyethelyenglykol, Polyoxypropylenglykol, Polyoxytetramethylenglykol oder acrylische Polylole, und einem Diisocyanat, wie zum Beispiel Xyloldiisocyanat, Hexamethylendiisocyanat, 4,4'- Dicyclohexylmethandiisocyanat, Toluidindiisocyanat, Phenylendiisocyanat, 4,4'- Diphenylmethandiisocyanat und 1,5-Naphthalindiisocyanat hergestellt.

In einer weiteren bevorzugten Ausführungsform der Erfindung besteht die haftvermittelnde Schicht aus einem aminofunktionalen Silan, welches die Folie zusätzlich dampfsterilisierfest macht (ein Laminat z. B. aus Folie, Beschichtung, Kleber oder aufgebrachten metallischen und keramischen Schichten delaminiert nicht) und darüber hinaus für die direkte Extrusionsbeschichtung mit Polymeren aufnahmebereit macht.

Generell wird das aminofunktionale Silan in Wasser hydrolysiert und auf eine oder mehrere Oberflächen des orientierten Polyesters mit konventionellen Methoden wie Sprüh- oder Rollenbeschichtung aufgebracht. Wenn die Silanbeschichtung einmal getrocknet ist, ist der so grundierte Polyester dampfsterilisierbar und aufnahmefähig für die direkte Extrusion mit anderen Polymeren. Die Extrusionsbeschichtung kann mit einem konventionellen Prozess durchgeführt werden.

Im weitesten Sinne zielt die vorliegende Erfindung in dieser Hinsicht auf eine orientierte Polyesterfolie ab, die eine haftvermittelnde Schicht aufweist, die es ermöglicht, dass die Folie dampfsterilisierbar und für die direkte Extrusionsbeschichtung aufnahmefähig wird. Die haftvermittelnde Schicht wird in ihrem unhydrolysierten Zustand durch folgende generelle Formel beschrieben:

$$(R^1)_a \, Si \, (R^2)_b \, (R^3)_c.$$

Die Erfindung umfasst auch ein dampfsterilisierbares Laminat bestehend aus einer orientierten Polyesterfolie, einer haftvermittelnden Schicht und einem direkt darauf extrudierten Polymer.

Silane sind nach der Hydrolyse wasserlöslich oder können in Wasser dispergiert werden, wobei aminofunktionale Silane besonders gut wasserlöslich sind. Es wurde gefunden, dass Aminosilane eine gute Haftung zu Farben, Klebern, Primern und metallischen und keramischen Schichten auch nach der Dampfsterilisation aufweisen und ebenso eine gute Haftung von extrusionsbeschichteten Polymeren zu Polyesterfolien ohne eine zusätzliche haftvermittelnde Schicht oder Corona-Behandlung vermitteln können. Der Verschnitt von Polyesterfolie mit Aminosilan-Beschichtung kann regeneriert werden.

Aminofunktionale Silane, die für den Zweck dieser Erfindung genutzt werden können, werden in ihrer nicht hydrolysierten Form durch folgende Formel beschrieben:

$$(R^1)_a \, Si \, (R^2)_b \, (R^3)_c,$$

wobei $R^1$ zumindest eine Aminogruppe enthält; $R^2$ ist eine hydrolysierbare Gruppe ausgewählt aus kurzkettigen Alkoxy-Gruppen mit 1-8 Kohlenstoffatomen, einer Acetoxy-Gruppe oder Halogeniden; und $R^3$ ist eine unreaktive, nicht hydrolysierbare Gruppe, entweder eine kurzkettige Alkyl-Gruppe mit 1-8 Kohlenstoffatomen oder eine Phenylgruppe; mit (a) größer oder gleich 1; (b) größer oder gleich 1; (c) größer oder gleich 0 und a+b+c = 4.

Beispiele von Aminosilanen, die zu dieser Formel passen, sind N-2-(Aminoethyl)-3-aminopropyltrimethoxysilan, 3-Aminopropyltrimethoxysilan, 4-Aminobutyltriethoxysilan, 4-Aminobutyldimethylmethoxysilan und p-Aminophenyltrimethoxysilan. Das bevorzugte Silan ist N-2-(Aminoethyl)-3-aminopropyltrimethoxysilan mit der folgenden Formel:

$$H_2N \, (CH_2)_2 \, NH(CH_2)_3 \, Si \, (OCH_3)_3.$$

Das hydrolysierte Aminosilan kann prinzipiell zu jedem möglichen Zeitpunkt bei der Herstellung der Folie aufgetragen werden, d. h. vor oder während des Streckprozesses, es kann auch auf die fertige Folie (z. B.) vor der Aufrollung aufgetragen werden.

Die haftvermittelnde Schicht wird durch die Mischung von Aminosilan mit Wasser bevorzugt in einem Bereich von 0,2 bis 6 Gew.-% hergestellt. Optional kann eine schwache Säure wie z. B. Essigsäure zugefügt werden, um die Hydrolyse zu fördern. Zumindest eine der hydrolysierbaren Gruppen des Silans wird zu einer Silanol-Gruppe (SiOH) hydrolysiert. Es wird angenommen, dass das Hydrolyseprodukt des Aminosilans eine partiell hydrolysierte cyclische Struktur hat, wobei die Amino-Gruppe wahrscheinlich ionische Bindungen zum Silizium-Teil des Moleküls bildet. Folglich bezieht sich der Terminus hydrolysiert, der hier verwendet wird, auch auf diese teilweise hydrolysierten Strukturen.

Die oben beschriebene erfindungsgemäße Beschichtung ist ausführlich in der EP-B-0 359 017 (Seiten 3 bis 5) dargestellt, auf die an dieser Stelle ausdrücklich Bezug genommen wird. Diese Schrift gibt auch Auskunft über weitere spezifische Kombinationen solcher hydrolisierbaren Aminosilane.

Die bevorzugten Copolyester-, Acrylat-, Silan- und hydrophilen Beschichtungen können weiterhin andere bekannte Zusätze enthalten wie z. B. Antistatika, Netzmittel, Tenside, pH-Regulatoren, Antioxidantien, Farbstoffe, Pigmente, Antiblockmittel wie z. B. kolloidales $SiO_2$ usw..

Herstellungsverfahren

Gegenstand der vorliegenden Erfindung ist auch ein Verfahren zur Herstellung der erfindungsmäßen Folien. Es umfasst das Herstellen einer mehrschichtigen Folie aus einer Basisschicht (B) und Deckschicht(en) (A) (und C) durch Coextrusion und Ausformen der Schmelzen zu einem flachen Schmelzefilm und biaxiales Strecken der Folie und Thermofixieren der gestreckten Folie. Gegebenenfalls wird die Folie während des Herstellungsverfahrens funktionsvermittelnd beschichtet.

Zunächst wird das Polymer bzw. die Polymermischung der einzelnen Schichten in jeweils einem Extruder komprimiert und verflüssigt. Die Schmelzen werden gleichzeitig übereinander durch eine Breitschlitzdüse gepresst, und die ausgepresste mehrschichtige Folie wird auf einer oder mehreren Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe von zwei entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die biaxiale Verstreckung, insbesondere von PET, im Allgemeinen durchgeführt werden kann, kann in einem relativ großen Bereich variieren und richtet sich nach den gewünschten Eigenschaften der Folie. Die Längsstreckung wird im Allgemeinen bei ca. 80 bis 140 °C und die Querstreckung bei ca. 80 bis 150 °C durchgeführt. Das Längsstreckverhältnis $\lambda_{MD}$ liegt dabei bevorzugt im Bereich von 2,0:1 bis 5:1. Das Querstreckverhältnis $\lambda_{TD}$ liegt im Allgemeinen im Bereich von 2,5:1 bis 5,0:1. Zweckmäßigerweise vor der Querstreckung kann man eine oder beide Oberflächen der Folie nach den bekannten Verfahren, beispielsweise mit den oben beschriebenen Beschichtungskompositionen, in-line beschichten. Die Folie kann zweckmäßigerweise nach der biaxialen Streckung auf einer oder beiden Oberflächen nach einer der bekannten Methoden corona- oder flammbehandelt werden. Die Behandlungsintensität liegt im Allgemeinen über 50 mN/m$^2$.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Die erfindungsgemäße Folie zeigt ein sehr gutes Handling, sehr gute Wickeleigenschaften und ein sehr gutes Verarbeitungsverhalten. Sie zeichnet sich durch ein hervorragendes Abziehverhalten vom Becher aus. Die erfindungsgemäße Folie eignet sich als Verpackungsmaterial für Nahrungs- und Genussmittel, insbesondere als Deckelfolie für Lebensmittelbehältnisse wie z. B. Joghurtbecher. Die Folie eignet sich daneben hervorragend zur Verpackung von feuchtigkeits- und/oder luftempfindlichen Nahrungs- und Genussmitteln, die ebenfalls in solchen Bechern enthalten sein können.

Die Folie nach der vorliegenden Erfindung weist daneben hervorragende optische Eigenschaften auf, zeigt hervorragende Weiterverarbeitungseigenschaften und eine ausgezeichnete Rollenaufmachung. Die Folie eignet sich aufgrund ihres sehr guten Handlings und ihrer sehr guten Verarbeitungseigenschaften insbesondere für die Verarbeitung auf schnelllaufenden Maschinen. Außerdem besitzt die Folie einen hervorragenden Weißgrad, der der Folie zusätzlich ein sehr attraktives, werbewirksames Aussehen verleiht.

Bei der Herstellung der Folie ist gewährgeleistet, dass das Regenerat, das z. B. als Verschnitt bei der Folienherstellung anfällt, in einer Konzentration von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die nachstehende Tabelle (Tabelle 1) fasst die wichtigsten Folieneigenschaften noch einmal zusammen.

**Tabelle 1**

| | bevorzugt | besonders bevorzugt | ganz besonders bevorzugt | Einheit | Messmethode |
|---|---|---|---|---|---|
| **Basisschicht B** | | | | | |
| Konzentration an Weißpigment | 3 bis 15 | 3,5 bis 14 | 4 bis 13 | Gew.-% | |
| **Deckschicht A** | | | | | |
| Konzentration an Weißpigment | 2 bis 15 | 2,5 bis 14 | 3 bis 13 | Gew.-% | |
| Konzentration des Antiblockmittels | 0,01 bis 2 | 0,05 bis 1,8 | 0,1 bis 1,6 | Gew.-% | |
| Partikeldurchmesser $d_{50}$ des Antiblockmittels | 2 bis 8 | 2,1 bis 7 | 2,2 bis 6 | $\mu$m | |
| Mittlere Rauigkeit $R_a$ der A-Seite | 40 bis 150 | 43 bis 140 | 46 bis 130 | nm | DIN 4762 |
| Reibungswert COF A-Seite gegen A-Seite | $\leq 0,4$ | $\leq 0,35$ | $\leq 0,30$ | | DIN 53375 |
| Dicke der Deckschicht A | 0,4 bis 6 | 0,5 bis 5 | 0,6 bis 4 | $\mu$m | |
| **Eigenschaften der Folie** | | | | | |
| Dicke der Folie | 5 bis 500 | 8 bis 400 | 10 bis 300 | $\mu$m | |
| Weißgrad der Folie nach Berger | >60 | >65 | >70 | | s. Beschreibung |
| Transparenz der Folie | <60 | <55 | <50 | % | ASTM-D 1003-00 |
| Glanz der Deckschicht A bei 20° | >20 | >25 | >30 | | DIN 67530 |
| Kontaktwinkel von Wasser auf beschichteter Folienoberfläche | $\leq 64$ | $\leq 62$ | $\leq 60$ | ° | |

Zur Charakterisierung der Rohstoffe und der Folien wurden die folgenden Messmethoden benutzt:

DIN = Deutsches Institut für Normung
ASTM = American Society for Testing and Materials

Transparenz

Die Transparenz wird in Anlehnung an ASTM-D 1003-00 gemessen.

Rauigkeit

Der arithmetische Mittenrauwert $R_a$ wird nach DIN 4762 bestimmt.

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989), beschrieben.

SV-Wert (Standard Viskosität)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV\ [\eta] = 6{,}907 \cdot 10^{-4}\ SV\ (DCE) + 0{,}063096\ [dl/g]$$

Reibung

Die Reibung wird nach DIN 53 375 bestimmt. Die Gleitreibungszahl wird 14 Tage nach der Produktion gemessen.

Glanz

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos.

Messung des mittleren Durchmessers $d_{50}$

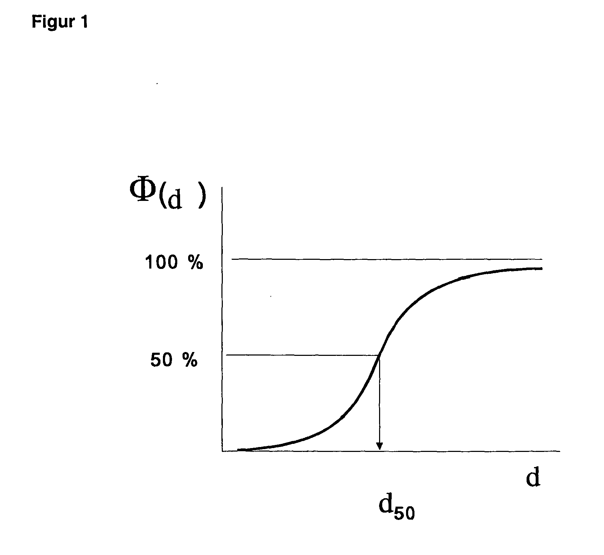

Die Bestimmung des mittleren Durchmessers $d_{50}$ wird mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes.
Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschten $d_{50}$-Wert. Wie dies zu verstehen ist, wird in Figur 1 näher verdeutlicht.

Wickelverhalten der Folie

Das Wickelverhalten der Folie wird visuell beim Aufwickeln der Maschinenrolle direkt nach der biaxialen Orientierung beurteilt.

+: Die Maschinenrolle ist einwandfrei gewickelt. Es sind keine Falten, kein Verschießen der Folienbahn und keine Blockpickel infolge von Verblockung von Folienlagen festzustellen.
-: Die Maschinenrolle ist fehlerbehaftet gewickelt. Es ist mindestens einer der folgenden Fehler zu beobachten: Falten, Verschießen der Folienbahn, Blockpickel infolge von Verblockung von Folienlagen.

Rollenaufmachung

Die Rollenaufmachung wird visuell nach der Konfektionierung der Maschinerolle zu schmäleren Kundenrollen beurteilt.

+: Die Kundenrolle ist einwandfrei gewickelt. Es sind keine Falten, keine Rillen in der Folienbahn und keine Blockpickel infolge von Verblockung von Folienlagen festzustellen.

-: Die Kundenrolle ist fehlerbehaftet gewickelt. Es ist mindestens einer der folgenden Fehler zu beobachten: Falten, Rillen in der Folienbahn, Blockpickel infolge von Verblockung von Folienlagen.

Kontaktwinkel mit Wasser

Die Polarität der Oberfläche wird durch eine Randwinkelmessung von destilliertem Wasser bestimmt. Die Messung fand bei 23 °C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, so dass der Tropfen während der Messung vorsichtig vergrößert und dann sofort mittels eines Goniometerokulars der Kontaktwinkel abgelesen wird (Messung des Fortschreitwinkels). Aus 5 Messungen wird der Mittelwert gebildet.

Verarbeitungsverhalten der Folie

Das Verarbeitungsverhalten der Folie wird visuell bei der Herstellung von Deckeln beurteilt.

+: Das Verarbeitungsverhalten der Folie ist einwandfrei. Es ist z. B. kein Curling, kein Hängenbleiben des Deckels im Siegelwerkzeug etc. festzustellen.

-: Das Verarbeitungsverhalten der Folie ist fehlerbehaftet. Es ist mindestens einer der folgenden Fehler zu beobachten: Curling, Hängenbleiben des Deckels im Siegelwerkzeug.

Beispiel 1

Chips aus Polyethylenterephthalat und Polyethylenterephthalat enthaltend Titandioxid als Weißpigment wurden getrocknet und dem Extruder für die Basisschicht (B) zugeführt. Ebenfalls wurden Chips aus Polyethylenterephthalat, Polyethylenterephthalat enthaltend Titandioxid als Weißpigment und Polyethylentertephthalat enthaltend ein Antiblockmittel getrocknet und dem Extruder für die beiden (gleichen) Deckschichten (A) zugeführt.

Dann wurde durch Coextrusion und anschließende stufenweise Orientierung in Längs- und Querrichtung eine weiße, dreischichtige Folie mit ABA-Aufbau und einer Gesamtdicke von 60 $\mu$m hergestellt. Die Dicke der beiden Deckschichten betrug jeweils 2 $\mu$m.

Basisschicht (B):

| 86 Gew.-% | Polyethylenterephthalat mit einem SV-Wert von 800 |
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |

Deckschicht (A), Mischung aus:

| 70 Gew.-% | Polyethylenterephthalat mit einem SV-Wert von 800 |
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
| 16 Gew.-% | Masterbatch aus 97,5 Gew.-% Polyethylenterephthalat (SV-Wert von 800) und 2,5 Gew.-% Sylobloc® 44 H (synthetisches $SiO_2$ der Fa. Grace, Durchmesser = 2,5 $\mu$m) |

Die Herstellungsbedingungen in den einzelnen Verfahrensschritten waren:

| Extrusion | Temperaturen | A-Schicht: | 280 | °C |
|---|---|---|---|---|
| | | B-Schicht: | 280 | °C |
| | | A-Schicht: | 280 | °C |
| | Temperatur der Abzugswalze | | 20 | °C |
| Längsstreckung | Temperatur | | 70-120 | °C |
| | Längsstreckverhältnis | | 3,2 | |
| Querstreckung | Temperatur | | 80-135 | °C |
| | Querstreckverhältnis | | 3,8 | |
| Fixierung | Temperatur | | 230 | °C |
| | Dauer | | 3 | S |

Es wurde eine Folie mit einer sehr guten Optik, mit sehr gutem Wickelverhalten, einer sehr guten Wickelqualität und einem sehr guten Verarbeitungsverhalten erhalten. Die Folie zeigte das gewünschte Verhalten beim Abziehen der Folie vom Becher.

Beispiel 1a

Es wurde eine Folie wie in Beispiel 1 beschrieben hergestellt, jedoch wurde diese nach der Fixierung einseitig coronabehandelt (2 kW/m$^2$). Die Folie hatte die Eigenschaften der Folie aus Beispiel 1 und zusätzlich eine verbesserte Haftung; der Kontaktwinkel zu Wasser betrug 63,7°.

Beispiel 1b

Die Folie wurde wie in Beispiel 1 hergestellt. Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid, wurde nach dem folgenden Verfahren als Haftvermittlerbeschichtung auf die C-Schicht der Polyesterfolie aufgebracht:

Die längsgestreckte Folie wurde coronabehandelt (8 kW/m$^2$) und danach durch Reversgravurbeschichtung auf der A-Schicht mit dem oben beschriebenen Latex beschichtet.

Die biaxial gestreckte Folie wurde bei 230 °C thermofixiert. Das Trockengewicht der Beschichtung betrug ca. 0,035 g/m$^2$ bei einer Beschichtungsdicke von etwa 40 nm.

Die wünschenswerten und erfindungsgemäßen Eigenschaften der Folie waren wie in Beispiel 1. Der Kontaktwinkel zu Wasser betrug 63,8°. Die Folie wurde auf ihre reprografische Haftung geprüft und ergab eine gute Haftung.

Beispiel 1c

Die Folie wurde wie in Beispiel 1b hergestellt. Eine wässrige Dispersion mit 6 Gew.-% Copolyester, bestehend aus 95 Mol-% Isophthalat, 5 Mol-% Na-5-Sulfoisophtalat und 100 Mol-% Ethylenglykol, und 0,56 Gew.-% kolloidalem SiO$_2$, wurde nach dem folgenden Verfahren als Beschichtung auf die Polyesterfolie aufgebracht:

Die längsgestreckte Folie wurde durch Reversgravurbeschichtung auf der A-Schicht mit der oben beschriebenen Copolyesterdispersion beschichtet.

Die biaxial gestreckte Folie wurde bei 230 °C thermofixiert. Das Trockengewicht der Beschichtung betrug ca. 0,030 g/m$^2$ bei einer Beschichtungsdicke von etwa 35 nm.

Die Siegel- und Peeleigenschaften der Folie waren wie in Beispiel 1. Der Kontaktwinkel zu Wasser betrug 57°.

Zwei Proben der so hergestellten einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter 10 Torr evakuiert, und von einem Wolframfaden wurden etwa 500 Å Aluminium sowohl auf die unbeschichtete Seite als auch auf die beschichtete Probe aufgedampft.

Innerhalb von 30 s nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und mit etwa dem gleichen Druck leicht über die Metalloberfläche gerieben. Das "Abriebverhalten" der beschichteten Seite der Folie wurde als gut bewertet.

Beispiel 1d

Die Folie wurde wie in Beispiel 1 hergestellt. Eine wässrige Dispersion mit 7 Gew.-% Feststoffgehalt, bestehend aus 50 Gew.-% des aromatischen Copolyesters A1 (Copolyester enthaltend 90 Mol-% Terephthalat, 10 Mol-% 5-Natriumsulfoisophtalat, 80 Mol-% Ethylenglykol und 20 Mol-% Diethylenglykol), 45 Gew.-% des wasserdispergierbaren Polymers B2 (Polyvinylalkohol mit einem Verseifungsgrad von 88 Mol-% und einem Polymerisationsgrad von 1.700) und 5 Gew.-% an inerten Partikeln D1 (kolloidales $SiO_2$ mit einem Partikeldurchmesser von 0,05 $\mu$m), wurde nach dem folgenden Verfahren als Beschichtung auf eine Polyesterfolie aufgebracht:

Die längsgestreckte Folie wurde durch Reversgravurbeschichtung mit der oben beschriebenen Copolyesterdispersion beschichtet. Das Trockengewicht der Beschichtung betrug ca. 0,040 g/m$^2$ bei einer Beschichtungsdicke von etwa 0,05 $\mu$m.

Die Siegel- und Peeleigenschaften der Folie waren wie in Beispiel 1. Der Kontaktwinkel zu Wasser betrug 50,0°.

Zur Beurteilung der Haftvermittlerwirkung der Beschichtung wurde eine wässrige Polyvinylacetal-Lösung (S-Lec KX-1, hergestellt von Sekisui Chemical Co., Ltd.; im folgenden als KX-1 bezeichnet) auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 $\mu$m aufgebracht. Die beschichtete Folie wurde unverzüglich zum Trocknen bei 100 °C für 4 min in einen Ofen gestellt. Ein schwarzes Quadrat (Fläche: 12 x 12 cm) wurde mit einem Ink-jet-Drucker (BJC-600J, Canon Inc.) auf die Oberfläche der getrockneten KX-1-Beschichtung gedruckt und für 12 h bei 23 °C und 50 % relativer Luftfeuchtigkeit unter Luft getrocknet. Ein Klebeband (Cello-tape, Nichiban Inc., Breite: 18 mm) wurde auf die bedruckte Fläche geklebt und schnell abgezogen. Der Grad der mit dem Klebeband abgetrennten bedruckten Oberfläche wurde visuell bestimmt. Die beschichtete Folie zeigte gute Hafteigenschaften.

Beispiel 2

Im Vergleich zu Beispiel 1 wurde jetzt nur die Zusammensetzung der Deckschichten (A) geändert. Alle anderen Parametern wurden beibehalten.

Deckschicht (A), Mischung aus:

| | |
|---|---|
| 82,6 Gew.-% | Polyethylenterephthalat mit einem SV-Wert von 800 |
| 5,4 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
| 12 Gew.-% | Masterbatch aus 97,5 Gew.-% Polyethylenterephthalat (SV-Wert von 800) und 2,5 Gew.-% Sylobloc 44 H (synthetisches $SiO_2$ der Fa. Grace, Durchmesser = 2,5 $\mu$m) |

Beispiel 3

Im Vergleich zu Beispiel 1 wurde die Basisschicht (B) geändert. Alle anderen Parameter wurden beibehalten.

Basisschicht (B):

| | |
|---|---|
| 35 Gew.-% | Polykondensationsrohstoff der Firma Invista (DE) mit 20 Gew.-% Anatas-Titandioxid (mittlerer Teilchendurchmesser Titandioxid ca. 0,32 $\mu$m) und 80 Gew.-% Polyethylenterephthalat mit einem SV-Wert von 800 |
| 65 Gew.-% | Polyethylenterephthalat mit einem SV-Wert von 800 |

Vergleichsbeispiel 1

Im Vergleich zu Beispiel 2 wurde jetzt nur die Zusammensetzung der Deckschichten (A) geändert. Es wurde das PET-MB mit dem Antiblockmittel in den Deckschichten weggelassen. Alle anderen Parametern wurden beibehalten.

Deckschicht (A), Mischung aus:

94,6 Gew.-%    Polyethylenterephthalat mit einem SV-Wert von 800

5,4 Gew.-%    Masterbatch der Fa. Sukano (Schindellegi, CH) mit 50 Gew.-% Rutil-Titandioxid (mittlerer Teilchendurchmesser Titandioxid ca. 0,3 μm) und 50 Gew.-% Polyethylenterephthalat mit einem SV-Wert von 800

Vergleichsbeispiel 2

Es wurde das Beispiel 1 der EP-B-0 605 130 nachgearbeitet. Die Folie zeigte aufgrund ihres Schichtaufbaus eine deutliche Rollneigung, was sehr nachteilig ist. Außerdem weist die Folie Nachteile in der Rollenaufmachung und im Verarbeitungsverhalten auf.

Vergleichsbeispiel 3

Es wurde das Beispiel 1 der EP-A-1 176 004 nachgearbeitet. Die Folie wies Nachteile im Wickelverhalten, in der Rollenaufmachung und im Verarbeitungsverhalten auf.

Die Ergebnisse der Beispiele / Vergleichsbeispiele sind in Tabelle 2 zusammengefasst.

**Tabelle 2**

| | | Weißgrad der Folie | Transparenz % | Glanz Messwinkel bei 20° A-Seite | C-Seite | Kontakt-winkel ° | Mittlere Rauigkeit $R_a$ der A-Seite nm | Reibungswert COF A-Seite gegen A-Seite | Wickel-verhalten | Rollenauf-machung | Verarbeitungs-verhalten |
|---|---|---|---|---|---|---|---|---|---|---|---|
| Beispiel | 1 | 93 | 30 | 54 | 53 | | 50 | 0,27 | + | + | + |
| | 1a | 93 | 30 | 54 | 53 | 63,7 | 50 | 0,27 | + | + | + |
| | 1b | 93 | 30 | 54 | 53 | 63,8 | 50 | 0,27 | + | + | + |
| | 1c | 93 | 30 | 54 | 53 | 57,0 | 50 | 0,27 | + | + | + |
| | 1d | 93 | 30 | 54 | 53 | 50,0 | 50 | 0,27 | + | + | + |
| | 2 | 93 | 30 | 56 | 58 | | 48 | 0,29 | + | + | + |
| | 3 | 91 | 28 | 58 | 60 | | 48 | 0,27 | + | + | + |
| V-Beispiel | 1 | 93 | 30 | 60 | 60 | | 34 | 0,42 | - | - | - |
| | 2 | 94 | 28 | 65 | 100[1] | | 35 | 0,48 | - | - | - |
| | 3 | 90 | 28 | 60 | 60[2] | | 35 | 0,49 | - | - | - |

[1] transparente Seite

[2] Monofolie

EP 1 806 225 A1

**Patentansprüche**

1. Weiße, biaxial orientierte Polyesterfolie, welche eine Basisschicht (B) und mindestens eine Deckschicht (A) aufweist, wobei

   a) die Basisschicht (B) ein weißfärbendes Pigment in einer Konzentration von 3 bis 15 Gew.-% enthält und
   b) die Deckschicht (A) ein weißfärbendes Pigment in einer Konzentration von 2 bis 15 Gew.-% und zusätzlich 0,01 bis 2 Gew.-% eines Antiblockmittels mit einem mittleren Teilchendurchmesser ($d_{50}$) von 2 bis 8 $\mu$m enthält.

2. Polyesterfolie nach Anspruch 1, **dadurch gekennzeichnet, dass** das weißfärbende Pigment Titandioxid ist.

3. Polyesterfolie nach Anspruch 1 oder 2, **dadurch gekennzeichnet, dass** das weißfärbende Pigment in der Basisschicht (B) und in der Deckschicht (A) Titandioxid ist.

4. Polyesterfolie nach Anspruch 2 oder 3, **dadurch gekennzeichnet, dass** das Titandioxid in der Basisschicht vom Anatas-Typ ist.

5. Polyesterfolie nach Anspruch 2, 3 oder 4, **dadurch gekennzeichnet, dass** das Titandioxid in der Deckschicht vom Rutil-Typ ist.

6. Polyesterfolie nach einem oder mehreren der Ansprüche 1 bis 5, **dadurch gekennzeichnet, dass** das Antiblockmittel in der Deckschicht (A) Siliciumdioxid ist.

7. Polyesterfolie nach einem oder mehreren der Ansprüche 1 bis 6, **dadurch gekennzeichnet, dass** die Basisschicht (B) zu mindestens 80 Gew.-% aus einem thermoplastischen Polyester besteht.

8. Polyesterfolie nach einem oder mehreren der Ansprüche 1 bis 7, **dadurch gekennzeichnet, dass** der thermoplastische Polyester der Basisschicht (B) Einheiten aus Ethylenglykol und Terephthalsäure und/oder Einheiten aus Ethylenglykol und Naphthalin-2,6-dicarbonsäure aufweist.

9. Polyesterfolie nach einem oder mehreren der Ansprüche 1 bis 8, **dadurch gekennzeichnet, dass** der thermoplastische Polyester der Basisschicht (B) Polyethylenterephthalat ist.

10. Polyesterfolie nach einem oder mehreren der Ansprüche 1 bis 9, **dadurch gekennzeichnet, dass** der thermoplastische Polyester der Basisschicht (B) und der thermoplastische Polyester der Deckschicht (A) identisch sind.

11. Polyesterfolie nach einem oder mehreren der Ansprüche 1 bis 10, **dadurch gekennzeichnet, dass** die Polyesterfolie einen ABC-Schichtaufbau hat, wobei die Deckschichten (A) und (C) gleich oder verschieden sind.

12. Polyesterfolie nach einem oder mehreren der Ansprüche 1 bis 11, **dadurch gekennzeichnet, dass** die Polyesterfolie einen ABA-Schichtaufbau hat.

13. Polyesterfolie nach einem oder mehreren der Ansprüche 1 bis 12, **dadurch gekennzeichnet, dass** die Deckschicht (A) der Folie eine mittlere Rauigkeit von 40 bis 150 nm aufweist.

14. Polyesterfolie nach einem oder mehreren der Ansprüche 1 bis 13, **dadurch gekennzeichnet, dass** der Reibungswert der Deckschicht (A) gegen die Deckschicht (A) kleiner/gleich 0,4 ist.

15. Polyesterfolie nach einem oder mehreren der Ansprüche 1 bis 14, **dadurch gekennzeichnet, dass** der Weißgrad der Folie nach Berger größer als 60 ist.

16. Polyesterfolie nach einem oder mehreren der Ansprüche 1 bis 15, **dadurch gekennzeichnet, dass** zumindest eine Folienoberfläche coronabehandelt ist.

17. Polyesterfolie nach einem oder mehreren der Ansprüche 1 bis 16, **dadurch gekennzeichnet, dass** die funktionsvermittelnde Schicht eine haftvermittelnde Schicht ist.

18. Polyesterfolie nach einem oder mehreren der Ansprüche 1 bis 17, **dadurch gekennzeichnet, dass** die haftvermittelnde Schicht einen Copolyester enthält.

19. Polyesterfolie nach einem oder mehreren der Ansprüche 1 bis 18, **dadurch gekennzeichnet, dass** die haftvermittelnde Schicht eine Acrylat-Schicht ist.

20. Polyesterfolie nach einem oder mehreren der Ansprüche 1 bis 19, **dadurch gekennzeichnet, dass** die haftvermittelnde Schicht eine hydrophile Schicht ist.

21. Polyesterfolie nach einem oder mehreren der Ansprüche 1 bis 20, **dadurch gekennzeichnet, dass** die haftvermittelnde Schicht einen Kontaktwinkel zu Wasser von kleiner/gleich 64° aufweist.

22. Verfahren zur Herstellung einer Polyesterfolie nach einem oder mehreren der Ansprüche 1 bis 21 umfassend die Schritte:

   a) Herstellen einer mehrschichtigen Folie durch Coextrusion,
   b) gegebenenfalls funktionsvermittelndes Beschichten oder Behandeln einer Folienoberfläche,
   c) biaxiales Strecken der Folie und
   d) Thermofixieren der gestreckten Folie.

23. Verwendung einer Polyesterfolie nach einem oder mehreren der Ansprüche 1 bis 21 als Verpackungsmaterial für Nahrungs- und Genussmittel.

24. Verwendung einer Polyesterfolie nach Anspruch 17 als Deckelfolie für Lebensmittelbehältnisse, insbesondere Joghurtbecher.

**Figur 1**

Europäisches
Patentamt

**EUROPÄISCHER RECHERCHENBERICHT**

Nummer der Anmeldung

EP 06 02 4869

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 529 636 A1 (MITSUBISHI POLYESTER FILM GMBH [DE]) 11. Mai 2005 (2005-05-11)<br><br>* Absätze [0047], [0048] *<br>* Absatz [0124] - Absatz [0139]; Beispiel 1; Tabelle 3 * | 1,2,6-9, 11,13, 15,23,24 | INV.<br>B32B27/36<br>B32B27/20<br>B65D77/20 |
| X | * Absätze [0111], [0112] * | 17,21 | ADD.<br>B65B7/28<br>C08K3/22 |
| A | EP 1 591 237 A (MITSUBISHI POLYESTER FILM GMBH [DE]) 2. November 2005 (2005-11-02)<br><br>* Absatz [0028] - Absatz [0043]; Ansprüche 8-21; Tabelle 2 * | 1-3, 7-15,17, 22-24 | C08K3/36 |
| A | * Absätze [0062], [0066] * | 16 | |
| A | US 6 420 010 B1 (HASEGAWA TETSUYA [JP] ET AL) 16. Juli 2002 (2002-07-16)<br>* Spalte 25, Zeile 42 - Spalte 26, Zeile 54; Beispiel 33; Tabelle 13/1 *<br>* Vergleichsbeispiel 29, Tabelle 13-2 *<br>* Vergleichsbeispiel 32, Tabelle 13-2 * | 1-3, 6-13,22 | |
| A | JP 11 179846 A (UNITIKA LTD) 6. Juli 1999 (1999-07-06)<br>* Absätze [0039], [0040]; Beispiel 3; Tabelle 1 *<br>* Vergleichsbeispiel 2; Tabelle 1 *<br>* Vergleichsbeispiel 4; Tabelle 1 * | 1-3, 6-12,22 | RECHERCHIERTE SACHGEBIETE (IPC)<br><br>B32B<br>B65D<br>B65B<br>C08K |
| A | JP 11 320795 A (TORAY INDUSTRIES) 24. November 1999 (1999-11-24)<br>* Absatz [0048] - Absatz [0054]; Beispiel 6; Tabelle 1 * | 1-12,22 | |
| A | JP 11 342577 A (TORAY INDUSTRIES) 14. Dezember 1999 (1999-12-14)<br>* Absätze [0035], [0036]; Beispiel 1; Tabelle 2 * | 1-3, 6-12,22 | |

Der vorliegende Recherchenbericht wurde für alle Patentansprüche erstellt

| Recherchenort | Abschlußdatum der Recherche | Prüfer |
|---|---|---|
| München | 12. März 2007 | Lindner, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 4869

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2007

| Im Recherchenbericht angeführtes Patentdokument | Datum der Veröffentlichung | Mitglied(er) der Patentfamilie | | Datum der Veröffentlichung |
|---|---|---|---|---|
| EP 1529636 A1 | 11-05-2005 | DE | 10352432 A1 | 09-06-2005 |
| | | JP | 2005186611 A | 14-07-2005 |
| | | KR | 20050045868 A | 17-05-2005 |
| | | US | 2005100718 A1 | 12-05-2005 |
| EP 1591237 A | 02-11-2005 | JP | 2005314700 A | 10-11-2005 |
| | | KR | 20060047538 A | 18-05-2006 |
| | | US | 2005238900 A1 | 27-10-2005 |
| US 6420010 B1 | 16-07-2002 | DE | 69718443 D1 | 20-02-2003 |
| | | DE | 69718443 T2 | 23-10-2003 |
| | | EP | 0881069 A1 | 02-12-1998 |
| | | WO | 9817471 A1 | 30-04-1998 |
| | | TW | 574277 B | 01-02-2004 |
| JP 11179846 A | 06-07-1999 | KEINE | | |
| JP 11320795 A | 24-11-1999 | KEINE | | |
| JP 11342577 A | 14-12-1999 | JP | 3033578 B2 | 17-04-2000 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0605130 B
- EP 1176004 A
- WO 9413476 A
- EP 0144878 A
- US 4252885 A
- EP 0296620 A
- WO 9413481 A
- EP 0359017 B